(19)

Europäisches
Patentamt
European
Patent Office
Office européen
des brevets

(11) **EP 2 770 465 A1**

(12) **EUROPEAN PATENT APPLICATION**

(43) Date of publication:
27.08.2014   Bulletin 2014/35

(51) Int Cl.:
**G06Q 10/08** $^{(2012.01)}$

(21) Application number: 13173070.7

(22) Date of filing: 20.06.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 26.02.2013   DE 102013203137

(71) Applicant: **Siemens Aktiengesellschaft 80333 München (DE)**

(72) Inventors:
• **Heinecke, Georg 39345 Flechtingen (DE)**
• **Lamparter, Steffen 81671 München (DE)**
• **Lepratti, Raffaello 90409 Nürnberg (DE)**
• **Warhanek, Maximilian 8001 Zürich (CH)**

(54) **Event-based data processing**

(57)     A method and a device for processing events in a technical system, comprising the following steps,
- triggering at least one event by at least one object (epc) at a first time ($t_A$) at a first location ($loc_A$) of the technical system (500),
- deriving a probability of an availability ($p_{t_D}$) of the at least one object (epc) at a second location ($loc_D$) of the technical system (500) at a later second time ($t_D$).

Further, a computer program product for performing said method and a computer readable medium is suggested.

FIG 5

EP 2 770 465 A1

**Description**

The invention relates to a method and to a device for processing events in a technical system. In addition, an according computer program product and a computer readablereadable medium are suggested.

Over the last years, the trend towards outsourcing and globalization in the automotive and other industries led to increasingly distributed production processes. These processes often rely on long and complex logistic networks involving a large number of companies geographically spread around the world.

Ongoing trends towards global supply chains, lean logistics and build-to-order as implemented e.g. in the automotive industry have led to new supply risks. Short order-to-delivery times and low safety stock levels have increased the vulnerability of Original Equipment Manufacturers (OEM) to small delivery delays of components. At the same time the increasing complexity of supply chains with rising numbers of suppliers and long transportation routes raises the occurrence frequency of such delivery delays.

These delivery delays can be reduced e.g. by real time tracking and tracing of goods along the supply chains which is facilitated by recent advances in RFID and other Auto-ID technologies. Data from such tracking and tracing systems can be used to analyze the material flow and determine crucial deviations from the planned processes.

As tracing of goods has to involve several companies along the process, common data standards are required. The EPCglobal network with its EPCIS (Electronic Product Code Information System) specification is an example for such a standard.

Lamparter, S.; Legat, C.; Lepratti, R.; Scharnagl, J.; Jordan, L.; (2011): "Event-Based Reactive Production Order Scheduling for Manufacturing Execution Systems", Proceedings of the 18th IFAC World Congress, 2011, Milan, Italy, pp. 2722-2730, proposes an architecture for integrating cross-company tracking and tracing functionality with a company's manufacturing operation management. For enabling short-term reactions on critical situations, an EPCIS-compliant event processing mechanism is suggested that supports identification of critical situations in the supply chain and triggers appropriate production rescheduling, e.g. based on a rule mechanism.

The **problem** to be solved is to provide an improved identification of problems in the supply chain and in particular to provide an improved event-based production control allowing an early identification of problems along the supply chain and a tight integration of supply chain information into productions operations management.

This problem is solved according to the features of the independent claims. Further embodiments result from the depending claims.

In order to overcome this problem, a method is provided for processing events in a technical system, comprising the following steps,

- triggering at least one event by at least one object epc at a first time $t_A$ at a first location $loc_A$ of the technical system,
- deriving a probability of an availability $p_{tD}$ of the at least one object epc at a second location $loc_D$ of the technical system at a later second time $t_D$.

The proposed solution enables a probabilistic interpretation of the situation within a technical system. By using stochastically and statistically means, an overall situation of the technical system can be evaluated. In contrast to the rule based concept, which only knows 2 possible statuses (i.e. "normal operation" and "disturbed operation"), the proposed probabilistic approach enables the consideration of uncertainties within the technical system and provides an exact evaluation of the situation in form of continuous probabilities.

The technical system may be e.g. a supply chain.

In an embodiment, the derived probability of the availability $p_{tD}$ of the at least one object epc at the second location $loc_D$ is updated each time an event is triggered by another object.

In next embodiment, the probability of the availability $p_{tD}$ of the at least one object epc at the second location $loc_D$ is derived based on a probability of an availability $p_{tB}$ of the at least one object epc at a third location $loc_B$ of the technical system at a third time $t_B$, wherein the third location $loc_B$ is located between the first location $loc_A$ and the second location $loc_D$.

In another embodiment, the probability of the availability $p_{tD}$ of the at least one object epc at the second location $loc_D$ at the later second time $t_D$ and the probability of the availability $p_{tB}$ of the at least one object epc at the third location $loc_B$ at the third time $t_B$ is updated each time the at least one event is triggered.

In a further embodiment, the probability of the availability $p_{tB}$ of the at least one object epc at the third location $loc_B$ at the third time $t_B$ is derived based on a lead time density distribution $P[\Delta_{tA,B}]$ for the at least one object epc to be moved from the first location $loc_A$ to the third location $loc_B$.

In a next embodiment, the lead time density distribution $P[\Delta T_{A,B}]$ is derived based on previous events, in particular based on a data mining procedure.

It is also an embodiment that the probability of the availability $p_{tB}$ of the at least one object epc at the third location $loc_B$ at the third time $t_B$ depends on whether the object may be available at the third location $loc_B$ within a lead

time $\Delta t_{A,B}{}^{min}$.

The lead time $\Delta t_{A,B}{}^{min}$ may be a minimum lead time, e.g. derived from the previous events

Pursuant to another embodiment, the probability of the availability $p_{tB}$ of the at least one object epc at the third location $loc_B$ at the third time $t_B$ is derived based on the lead time density distribution $P[\Delta t_{A,B}]$ according to the following relation:

$$p_{tB}(epc) = P[\Delta t_{A,B} = t_B - t_A(epc)]$$

with $t_B \geq t_A(epc) + \Delta t_{A,B}{}^{min}$
wherein:

- $\Delta t_{A,B}{}^{min}$ represents a minimum lead time,
- $P[\Delta t_{A,B}]$ represents the lead time density distribution,
- $p_{tB}(epc)$ represents the probability of the availability of the at least one object epc at the third location $loc_B$.

The aforementioned embodiment is valid, if the minimum lead time $\Delta t_{A,B}{}^{min}$ concerning the movement of the object epc from the location $loc_A$ to the successive location $loc_B$ has not yet passed.

According to an embodiment, the probability of the availability $p_{tB}$ of the at least one object epc at the third location $loc_B$ at the third time $t_B$ is derived based on the lead time density distribution $P[\Delta t_{A,B}]$ according to the following relation:

$$p_{tB}(epc) = \frac{P[\Delta t_{A,B} - t_B - t_A(epc)]}{1 - P[\Delta t_{A,B} < t_0 - t_A(epc)]}$$

with $t_B \geq t_0$
wherein:

- $\Delta t_{A,B}{}^{min}$ represents a minimum lead time,
- $t_0$ represents an actual prosecution time,
- $P[\Delta t_{A,B}]$ represents the lead time density distribution,
- $p_{tB}(epc)$ represents the probability of the availability of the at least one object epc at the third location $loc_B$.

This embodiment is valid, if the minimum lead time $\Delta t_{A,B}{}^{min}$ concerning the movement of the object epc from the location $loc_A$ to the successive location $loc_B$ has already passed at the actual prosecution time $t_0$

According to another embodiment, the probability of the availability $p_{tB}$ of the at least one object epc at the third location $loc_B$ at the third time $t_B$ is represented by a probability density function of the availability $P_{tB}(epc)$ which is used as an initial condition of a Bayesian network being used to derive the probability of the availability $p_{tD}$ of the at least one object epc at the second location $loc_D$ at the later second time $t_D$.

In yet another embodiment, the probability of the availability $p_{tD}$ of the at least one object epc at the second location $loc_D$ at the later second time $t_D$ is derived from a probability density function of the availability $P_{tD}(epc)$ of the at least one object at the second location $loc_D$ which is provided by the Bayesian network according to the following mathematical convolution:

$$P_{tD}(epc) = P_{tB}(epc) * P[\Delta t_{B,D}]$$

wherein:

- $P_{tB}(epc)$ represents the probability density function of the availability, and
- $P[\Delta t_{B,D}]$ represents a lead time density distribution for the at least one object epc to be moved from the third location $loc_B$ to the second location $loc_D$
- $p_{tD}$ represents the probability of the availability of the at least one object epc at the second location $loc_D$.

According to a next embodiment, the lead time density distribution $P[\Delta t_{B,D}]$ is derived based on previous events, in particular based on a data mining procedure.

Pursuant to yet an embodiment, a cumulated probability density function of the availability, which is derived based on the probability density function of the availability $P_{tD}(epc)$, is used to derive a build probability $P_j[t_D{}^{build}(epc)$

$\leq t_D$] for a job j associated with the at least one object epc at the later second time $t_D$ or earlier.

In a next embodiment, the build probability $P_j[t_D^{build}(epc) \leq t_D]$ is derived dependent on a probability of an attempt $P_j[t_D^{att} \leq t_D]$ to use the at least one object epc for the job j at the later second time $t_D$ or earlier.

It is also an embodiment that the build probability $P_j[t_D^{build}(epc) \leq t_D]$ is derived by using a Monte-Carlo simulation.

Pursuant to another embodiment, the at least one event is triggered each time the at least one object epc is passing a gate located at the first or the second or the third location $loc_A$, $loc_D$, $loc_B$.

According to an embodiment, the at least one event is an EPCIS-event according to the EPCIS specification.

In another embodiment, the second location ($loc_D$) is representing a factory of an Original Equipment Manufacturer or a logistics service provider.

The problem stated above is also solved by a device comprising and/or being associated with a processor unit and/or a hard-wired circuit and/or a logic device that is arranged such that the method as described herein is executable on said processor unit.

The solution provided herein further comprises a computer program product directly loadable into a memory of a digital computer, comprising software code portions for performing the steps of the method as described herein.

In addition, the problem stated above, is solved by a computer readable medium, having computer-executable instructions adapted to cause a computer system to perform the steps of the method as described herein.

Embodiments of the invention are schematically shown and illustrated in the following figures:

Fig.1      shows an example of a functional architecture of an event-based production control system for monitoring a supply chain;

Fig.2      shows an overview of an exemplary structure of a supply chain;

Fig.3A      shows an exemplary scenario of a gate-to-gate delivery process;

Fig.3B      shows an example for deriving a lead time density distribution based on the scenario as shown by Fig.3A;

Fig.4      shows an example for plan deviations in production start and transport departure;

Fig.5      shows an exemplary scenario for arrival time prediction in a supply chain;

Fig.6A      shows an example for the definition of an initial condition of a Bayesian network;

Fig.6B      shows an example for the respective generation of a Bayesian Network based on the defined initial condition according to Fig.6A;

Fig.7      exemplarily shows several possibilities for defining the initial condition of the Bayesian network;

Fig.8      exemplarily shows several examples for estimating build probabilities of production jobs or departure probabilities for transport jobs according to the proposed solution;

Fig.9      shows an example for the first repetition of the Monte-Carlo simulation.

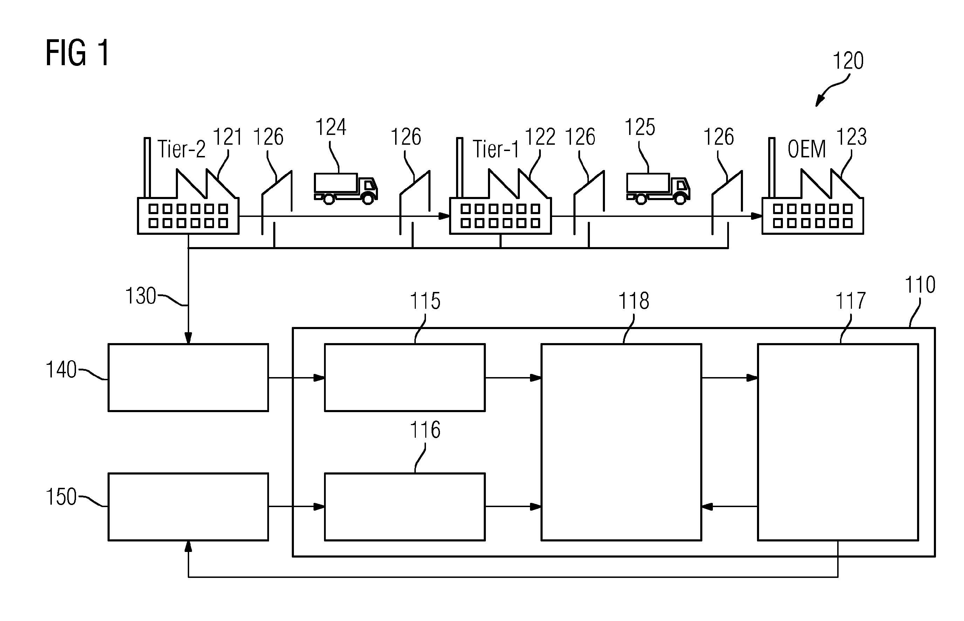

**Fig.1** shows an example of a functional architecture of a control system 110 for monitoring a supply chain 120 and for providing planning processes at a factory of an OEM 123 representing an end of the supply chain 120.

The supply chain 120, monitored by the production control system 110 exemplarily comprises a "tier-2" supplier represented by a production element 121 of the supply chain 120, a "tier-1" supplier, represented by a production element 122 and the OEM, represented by a production element 123 of the supply chain 120. Further, the supply chain comprises a transport element 124, representing a transport of at least one object between the tier-2 supplier and the tier-1 supplier 12 and a transport element 125, representing a transport of at least one object between the tier-1 supplier and the OEM.

Objects are representing e.g. products, materials components, palettes or containers, wherein palettes or containers are representing e.g. materials aggregated for transport purposes.

Several tracking means, in the following simply called "gates" 126 are located within the elements 121 to 125 of the supply chain 120, using e.g. RFID technology for tracking movements of the objects moving through the supply chain 120 as "events". Each time an object passes a gate 126, an object-event is triggered according to the EPCIS specification, which is also referred to as EPCIS-event.

Supply chain data 130 representing the current state of the supply chain 120 are gathered as EPCIS-events at the production and transport elements 121 to 125 and stored in an storing module 140 comprising a memory. The control system 110 retrieves the supply chain data 130 provided by the storing module 140 via an EPCIS connection module 115. Further information provided by a resource planning system 150, representing a target state of the supply chain 120, can be retrieved by the control system 110 via a planning data connection module 116. By comparing the current state and the target state of the supply chain 120, a monitoring module 118, implemented in the control system 110, processes status information, e.g. EPCIS-events, concerning the supply chain 120. In case of deviations between the current state and the target state, the monitoring device 118 may raise an alarm and initiates a reaction (like e.g. a production scheduling) at a production planning module 117 implemented in the control system 110. Possible countermeasures for eliminating the identified deviations are evaluated and optimized by the reactive production planning device 117 to achieve an improvement of the OEM performance. A resulting adjustment of a production plan at the OEM based on the identified countermeasures may be executed via a feedback to the resource planning system 150. The results may be used at the OEM.

The functionality of the monitoring module 118 in combination with the reactive production planning module 117 may be implemented e.g. as an event processor being part of an Extended Manufacturing Execution System as disclosed in the aforementioned article of Lamparter.

In the following, one possible, exemplarily structure of the supply chain 120 is disclosed in more detail.

The elements 121 to 125 of the supply chain 120, disclosed above, can each be defined by the following four characteristics: Type, Position, Gate and Object Type

Two types of elements 121 to 125 may be defined for modeling the structure of the supply chain 120, i.e. "production" and "transport".

The element type "production" 121, 122, 123 is represented by a supplier or the OEM. An object representing e.g. a product may be processed during a production process at a factory of a supplier or an OEM. Examples for such a production process are storage, production or packaging etc.

The element type "transport" 124,125 relates to transporting an object which leaves the object unchanged, i.e. the movement of aggregated objects through a transport element 124, 125 is identical.

However, single objects may be delayed in the production elements 121, 122, 123 and in the transport elements 124, 125 due to quality issues, machine failures, human errors, etc.

Position

Each supply chain element 121 to 125 is positioned in the structure of the supply chain 120 in relation to (esp. before or after) the other elements. A production element 121, 122, 123 may be served by multiple suppliers. A supply chain branch may start with either a production element or a transport element and can be arranged as an arbitrary combination of these elements. The end of the supply chain is typically a production element 123 representing the OEM.

Gates

Gates 126 are predefined by observations points defined e.g. by the storing module 140. A segment between two successive gates 126 within an element 121 to 126 is representing a section. No information concerning the current state of the supply chain 120, other than the EPCIS-events generated at the gates 126, is available for further processing at the control system 110.

Data representing the movement of objects between the gates 126 is transformed into a lead time density distribution, also referred to as a "probability density function of the lead time". The probability density function of the lead time of each section within a production or transport element is deduced empirically from the time differences of EPCIS-events identified at the gate 126 before and after a section.

Each gate 126 may be identified by a unique Serialized Global Location Number (SGLN) to ensure the correct mapping of identified EPCIS-events during the analysis of an as-is state.

Object

Objects are representing e.g. products, materials components, palettes or containers. For each object in the supply chain, a product type may be defined based on a company prefix and an item reference in the Serialized Global Trade Item Number (SGTIN). Logistical handling units like e.g. containers or palettes can be assigned with a Serial Shipping Container Code (SSCC).

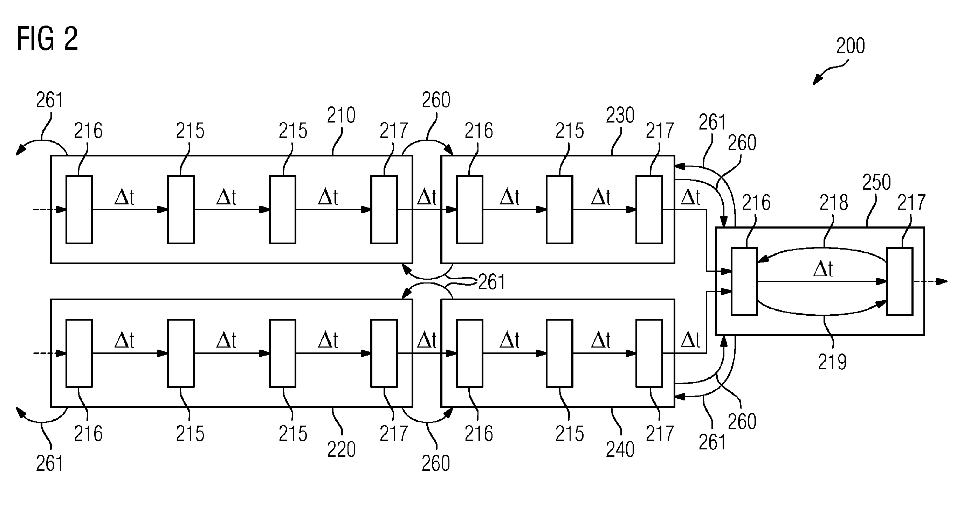

**Fig.2** shows an overview of an exemplary structure of a supply chain 200 which is modeled as a tree structure. A main tree consists of nodes representing supply chain elements 210, 220, 230, 240, 250. According to the example of Fig.2, the elements 210 and 220 are representing factories in terms of tier-1 suppliers and the elements 230 and 240 are representing transport elements located between the factories of the tier-1 suppliers and an OEM which is represented by the element 250 as a root node of the supply chain 200. Each element 210, 220, 230, 240, 250 may comprise several gates 215, 216, 217.

Each element 210, 220, 230, 240 except the OEM 250 is connected to a receiving element (indicated by an arrow 260) which in "real world" is the receiver of objects coming from that respective element 210, 220, 230, 240. Furthermore, each element 210, 220, 230, 240, 250 is connected to a supplying element (indicated by an arrow 261), which is the source of objects received by that respective element 210, 220, 230, 240, 250. Those elements 210, 220, 250, representing factories, may have an unlimited number of supplying elements 261, whereas those elements 230, 240, representing a transport, can only receive material from one supplying element 261 at maximum. Elements at the end of branches, containing gates passed by objects at the very first, do not have supplying elements.

Each element 210, 220, 230, 240, 250 exemplarily comprises a first gate 216 and a last gate 217 in the order the gates 215, 216, 217 are passed by objects. Furthermore, each gate 215, 217 except the first gate 216 is connected to a previous gate (exemplarily indicated by arrow 218 in the element 250) and each gate 215, 216, except the last gate 217 is connected to a next gate (exemplarily indicated by arrow 219 in the element 250) in the order they are passed by objects within each element 210, 220, 230, 240, 250. The first gate 216 at each element 210, 220, 230, 240, 250 represents a "material receipt".

Object Events

Object events (e.g. identification of EPCIS-events triggered by objects passing the different gates 215, 216, 217 during their movement through the supply chain 200) occur at various occasions indicating the location of a certain object at a certain time. Thus, for each object- or EPCIS-event, a state transition within the model is executed by the control system 110. This means that the identified objects are allocated to the respective gate 215, 216, 217 at which the object event was generated and removed from the previous gate 215, 216, 217. For this purpose, each object is unambiguously identified by event data. In particular, the presence of an object at a gate 215, 216, 217 may be modeled based on an electronic product code EPC, which may e.g. be stored in a list allocated to the control system 110.

One aspect of the proposed solution is a two stage process. In a first stage, probability distributions are derived based on archived data during a data mining procedure. The derived information is processed during a second stage (e.g. during operation of the control system 110 as shown in Fig.1) to enable a probabilistic, on-line interpretation of incoming EPCIS-events triggered by objects.

Data Mining

The proposed solution uses a model based on actual observations in the supply chain and on historic data describing the probabilistic behavior of the supply chain. By using data mining, the aforementioned probabilistic behavior is derived, in particular representing two dimensions.

First, historic EPCIS-events, representing the behavioral visibility of objects, have to be retrieved from an appropriate database and have to be analyzed e.g. by the control system 110 as shown in Fig.1. Based on the structural assumption as exemplarily shown in Fig.2, objects of the same kind (e.g. car seats, engine, tires, etc.) will follow the same way in the supply chain 200, representing a sequel of production and transport processes. Hence, from the start of the production at the respective supplier 210, 220 to the potential delivery to the OEM 250, it is possible to determine an individual progress or status of a certain object by identifying successive readings of EPCIS-events triggered by the object at the gates 216, 215, 217 along its way through the various processes in the supply chain 200. Consequently, varying durations (representing different time intervals $\Delta t$) based on two successive readings triggered by several objects of the same kind passing the same succeeding gates (section) result in a "lead time density distribution" representing varying times $\Delta t$ (e.g. due to unforeseen occurrences) of a production or transport process.

Second, beside the aforementioned variations in times $\Delta t$, a deviation from plan adherence, caused by a deviation of a build time $t_{plan}$ originally planned for an actual start of production $t_{build}$, is also possible due to unforeseen plan changes. Hence, the control system 110 also has to retrieve the respective data from the resource planning system 150 and has to estimate a plan deviation density distribution based on planned production and based on planned transport processes.

Lead time density distribution

Two distinct processes can be distinguished from successive readings of EPCIS-events triggered by the same object traversing the supply chain 200.

First, two successive readings of the same object at different locations, i.e. the gates 215, 216, 217, in the supply chain 200 imply a linear process by transporting an object from one point to another (e.g. between companies, between points of an assembly line, etc.).

Second, the successive readings of the same object at the same location, i.e. the gates 215, 216, 217, imply a cyclic process wherein an object leaves the process the same way as it has entered (e.g., inventory or work cells, etc.).

In both cases, a certain duration of the time $\Delta t$. representing a lead time, passes in between the two readings during which a process is active.

The lead time $\Delta t$ is important for production planning purposes. However, due to unforeseen occurrences and other deviations, the lead time $\Delta t$ varies around an average value. A respective lead time density distribution based on successive readings of EPCIS-events is estimated during the data mining procedures.

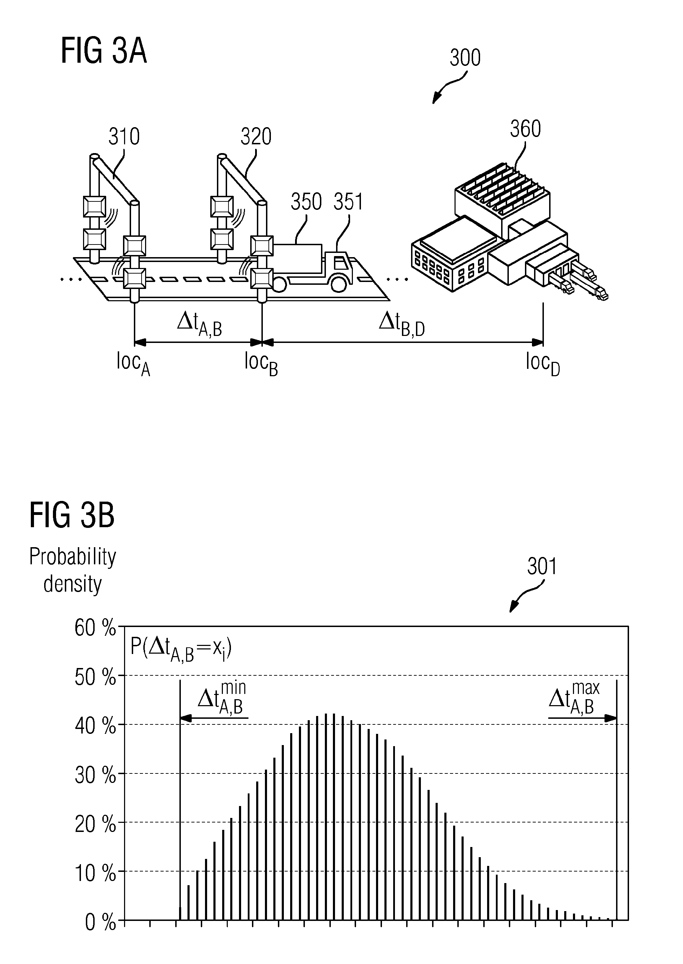

**Fig.3B** shows an example for a lead time density distribution in form of a probability density function $P_r[\Delta t_{A,B}]$, represented by a graph 301, based on two successive readings, triggered e.g. by EPICIS-events of the same object 350 during a gate-to-gate delivery process 300 visualized in **Fig.3A.** A gate 310 is located at location $loc_A$ and a gate 320 is located at location $loc_B$. The object 350, representing e.g. a container loaded on a truck 351, is identified by an EPIS-event triggered by the gate 310 at the location $loc_A$ at a time $t_A$ and by an EPCIS-event triggered by gate 320 at the subsequent location $loc_B$ at a time $t_B$ with a transport section occurring in between these two identifications.

Further, an additional transport section is shown between gate 320 at the location $loc_B$ and a factory of an OEM 360 which is located at a location $loc_D$.

Based on the EPCIS-events, recorded for the data mining procedure, it is possible to extract individual durations or lead times $\Delta t_{A,B}(epc_i)$ for a recorded transport of a specific object characterized by a specific electronic program code $epc_i$ by subtracting the time of the second reading $t_B(epc_i)$ at the location $loc_B$ from the time of the first reading $t_A(epc_i)$ at the location $loc_B$. The resulting individual lead times $\Delta T_{A,B}$ are placed into specific intervals $x_i$ of a pre-defined length, representing the domains of the resulting probability density function concerning the lead time density distribution $P_r[\Delta t_{A,B}]$ and representing the abscissa of the graph 301 accordingly. The intervals $x_i$ can be derived according the following relation:

$$x_0 = \Delta t_{A,B}^{\min} - (\Delta t_{A,B}^{\min} \mod r)$$

$$x_i = x_0 + r \cdot i \text{ with } i \in \mathbb{N}; i \leq \frac{\Delta t_{A,B}^{\max} - x_0}{r}$$

wherein

$\Delta t_{A,B}^{min}$ represents a minimum lead time, and
$\Delta t_{A,B}^{max}$ represents a maximum lead time.

These discrete intervals $x_i$ serve two distinct purposes.

Firstly, processing time during on-line operation of the production control system 110 is reduced significantly by considering individual EPCIS-events from the supply chain.

Secondly, deriving a density function with a smallest possible resolution r with e.g. r = 1 second is unnecessary accurate for a delivery process lasting between 2 to 6 hours. By choosing an appropriate resolution r, the probability density function $P_r[\Delta t_{A,B}]$ is derived by determining a number of readings n resulting in lead times falling into distinct intervals $x_i$ and staying in the context of all objects $n_{tot}$ recorded between the location $loc_A$ and the location $loc_B$ :

$$P_r[\Delta t_{A,B} = x_i] = \sum_{x_i}^{x_i + r - 1} \frac{n(\Delta t_{A,B}^{x_i})}{n_{tot}} \text{ with } n_{tot} = \sum_i n[\Delta t_{A,B}(epc_i)]$$

The derived probability density function $P_r[\Delta t_{A,B} = x_i]$, as shown by the graph 301, is bound by a respective minimum lead time $\Delta t_{A,B}^{min}$ and by a respective maximum lead time $\Delta t_{A,B}^{max}$, both being part of the recorded EPCIS events.

According the proposed solution applied to the scenario of Fig.3A, beside the knowledge about the individual lead time density distribution between two successive readings of the object 350 between the gate 310 at the location $loc_A$ and the gate 320 at the location $loc_B$, additional knowledge may be estimated concerning a necessary lead time $\Delta T_{B,D}$ for the object 350 for moving from location $loc_B$ to the next supply chain entity, e.g. located at location $loc_D$. Hence, based on the example as shown on the Fig.3A, one may estimate a gate-to-OEM density function $P_r = [\Delta t_{B,D}]$ based on the lead time density distribution representing the transport of the object 350 between the gate 320 at the location $loc_B$

and the OEM at the location $loc_D$. For determination or estimation of the respective gate-to-OEM lead time density function $P_r = [\Delta t_{B,D}]$, all possible individual lead time density functions of successive readings of EPICS-events between the location $loc_B$ and the location $loc_D$ (indicated by a dotted line in the gate-to-gate delivery process 300) are convoluted until the object 350 arrives at the OEM 360.

Hence, the aforementioned determination or estimation of the gate-to-gate lead time probability density function $P_r[\Delta t_{A,B} = X_i]$ has to be repeated for all successive readings of EPCIS-events between the location $loc_B$ and the location $loc_D$ during the data mining procedure. Since highest accuracy for the resulting convoluted density function is preferable, the estimation of the individual gate-to-gate density functions between two successive readings is calculated based on the smallest possible length/resolution (r = 1) of a time interval.

The respective boundaries of a resulting convoluted lead time density function are determined by adding the respective shortest $\Delta t_{B,D}^{min}$ and longest $\Delta t_{B,D}^{max}$ of all density functions. The resulting convolution $P_r[\Delta t_{B,D} = y_i]$ (based on the same resolution r) of successive density functions (each representing the progress of a production process or transport process of an object respectively from start to finish) is defined as:

$$P_1[\Delta t_{B,D} = y_i] = P_1[\Delta t_{B,...} = y_i] * ... * P_1[\Delta t_{...,D} = y_i] \text{ with } \Delta t_{B,D}^{min} \leq y_i \leq \Delta t_{B,D}^{max}$$

Generally, the discrete convolution of two functions P[n] and Q[n] is defined as:

$$P[n] * Q[n] = \sum_{m=-\infty}^{\infty} P[m]Q[n-m]$$

The resulting convoluted density function $P_r[\Delta t_{B,D} = y_i]$ now has the minimum possible resolution with r = 1, which has no negative effect if computing time can be neglected.

However, during on-line event processing, the resolution r is a factor for keeping the control system 110 scalable for object events arriving with a high arrival rate. Hence, discretizing the convoluted density function $P_r[\Delta t_{B,D} = y_i]$ is one aspect for achieving sufficient system performance. The respective domain is determined in the same way as it was presented for the gate-to-gate density function $P_r[\Delta t_{A,B} = X_i]$, i.e. the number of individual lead times are subsequently placed into the respective specific intervals $x_i$ of a length r.

The discretized convoluted density function $P_r[\Delta t_{B,D} = x_i]$ results as:

$$P_r[\Delta t_{B,D} = x_i] = \sum_{x_i}^{x_i+r-1} P_1[\Delta t_{B,D} = y]$$

wherein the time interval $\Delta T_{B,D}$ is also referred to as arrival time.

Density distribution of production plan deviations

The scheduled build time $t_{build}$ is a parameter, each OEM or supplier intents to adhere to. Hence, if the object 350, required e.g. for production at the OEM 360, arrives at the location $loc_D$ within the estimated arrival time $\Delta T_{B,D}$ before the scheduled build time $t_{build}$, a production plan, also referred to as production schedule, can be executed as originally planned. However, OEMs may have to change production schedules until the last minute due to internal circumstances, independent from e.g. an imminent material shortage. Hence, a non-probabilistic build time $t_{build}$ can be defined more flexible based on a probabilistic model-based approach.

For that, an individual plan deviation $\Delta t_{plan}$ is derived by subtracting a registered time indicating an actual production start $t_{build}$ relevant for an object $epc_i$ from a planned build time $t_{plan}$ as stored e.g. in the resource planning system 150:

$$\Delta t_{plan}(epc_i) = t_{plan}(epc_i) - t_{build}(epc_i)$$

Based on the plan deviation $\Delta t_{plan}$, a density function $Pr[\Delta t_{plan} = x_i]$ concerning the plan deviations $\Delta t_{plan}$ has to be derived, which can happen similar to the derivation of the density function $P_r[\Delta t_{A,B} = x_i]$ based on the lead time density distributions:

$$P_r[\Delta t_{plan} = x_i] = \sum_{x_i-r}^{x_i-1} \frac{n[\Delta t_{x_i}]}{n_{tot}} \text{ with } n_{tot} = \sum_i n[\Delta t_{plan}(epc_i)]$$

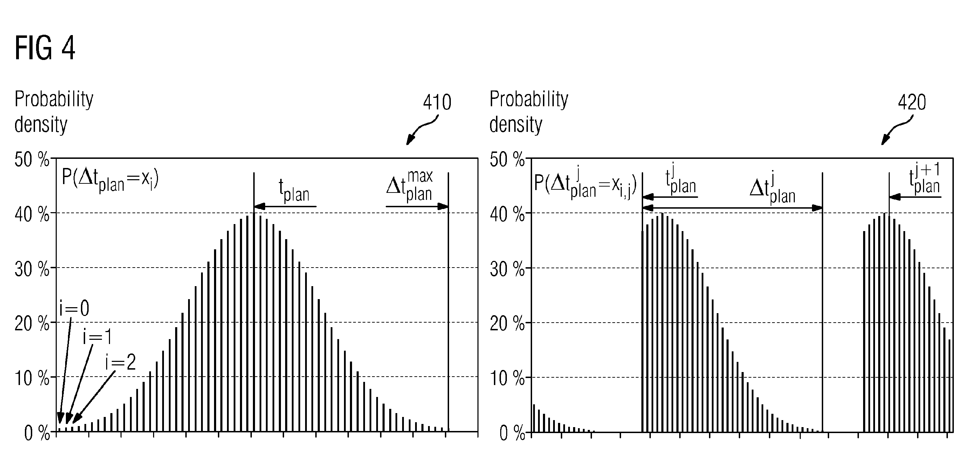

Accordingly, the boundaries are determined by the respective smallest and largest recorded plan deviation (i.e. $\Delta t_{plan}^{min}$ and $\Delta t_{plan}^{max}$) and the density is fitted to the resolution r. An example for the plan deviation density function $P_r[\Delta t_{plan} = x_i]$ concerning a production start is shown by a graph 410 on the left side of **Fig.4.** The specific intervals $x_i$ of a pre-defined length are representing the domains of the resulting density function $P_r[\Delta t_{plan} = x_i]$ as shown by the abscissa of the graph 410 accordingly.

Deviations in planned or scheduled build time $\Delta t_{plan}$ at the OEM is not the only input which should be considered by the control system 110. Additional information concerning plan data from the suppliers may be considered by the control system 110 to predict an arrival of an object beyond the delivery process between the supplier and the OEM. Without available plan data, the necessary information has to be derived from historic EPCIS-events. In this case, the production control system 110 has to estimate an order to delivery (OTD) density distribution which defines a time difference $otd(epc_i)$ between an order entry $t_{order}(epc_i)$ at the supplier for a specific object $epc_i$ ordered at the OEM and a corresponding subsequent production start $t_{build}(epc_i)$ at the supplier which can be also derived based on historic data:

$$otd(epc_i) = t_{order}(epc_i) - t_{build}(epc_i)$$

Analogous to the estimation of the density function $P_r[\Delta t_{plan} = x_i]$ an OTD density function $P_r[odt = x_i]$ has to be defined for the resolution r in the respective boundaries of the minimum and maximum recorded otd-time.

Density distribution of deviations in transport departures

According to the exemplary plan deviation density function $P_r[\Delta t_{plan} = x_i]$ as shown by the graph 410 on the left side of Fig.4, a production process can start behind a planned build time $t_{plan}$ (schedule) or ahead of it due to unforeseen changes.

In principal, a transport can start at any time wherein the model behavior concerning the time span between a scheduled transport departure and an actual transport departure is similar to the model behavior concerning the lead time density function $P_r[\Delta t_{A,B} = x_i]$ and the density function concerning production plan deviations $P_r[\Delta t_{plan} = x_i]$.

However, this is not valid for periodic transport processes, usually applied for replenishment policies of Just-In-Case parts (JIC). Contrary to production processes, periodic transports do not leave ahead of schedule. They can only be delayed because, e.g., a shipment is not yet complete at a scheduled time with some material still missing.

An example for a deviation density function $Pr[\Delta t_{plan}^j = x_{i,j}]$ concerning transport departures is shown by a graph 420 on the right side of Fig.4 visualizing the probability of transport departures at any time during a specific time window (e.g., during a day or during a week). For tracking transports, the production control system 110 e.g. has to analyze all the EPCIS-events being relevant for objects, identified with an electronic program code representing a type = vehicle.

Similar to the derivation of the density function $P_r[\Delta t_{plan} = x_i]$ based on the production plan deviations, plan departures $t_{plan}^j$ have to be fitted to the resolution r in a first step and then, in a second step, a separate density function for each departure time j, j+1 (representing e.g. a certain time window) has to be derived. By dividing the number of occurrences in each interval $x_{i,j}$ by the total number of recorded transports, it is possible to derive the density function $P_r[\Delta t_{plan}^j = x_{i,j}]$ based on deviations of the plan departures.

Probabilistic arrival time prediction

During the data mining procedure, representing the first step of the proposed solution, the aforementioned density functions concerning the lead time $P_r[\Delta t_{A,B} = x_i]$, concerning the production plan deviations $P_r[\Delta t_{plan} = x_i]$, and concerning the deviations in transport departures $P_r[\Delta t_{plan}^j = x_{i,j}]$ have been derived based on archived (recorded) data.

Now, during a second stage of the proposed solution, which is explained further below, the derived information is used for the calculation of arrival probabilities for every object moving through the supply chain based on EPCIS-events.

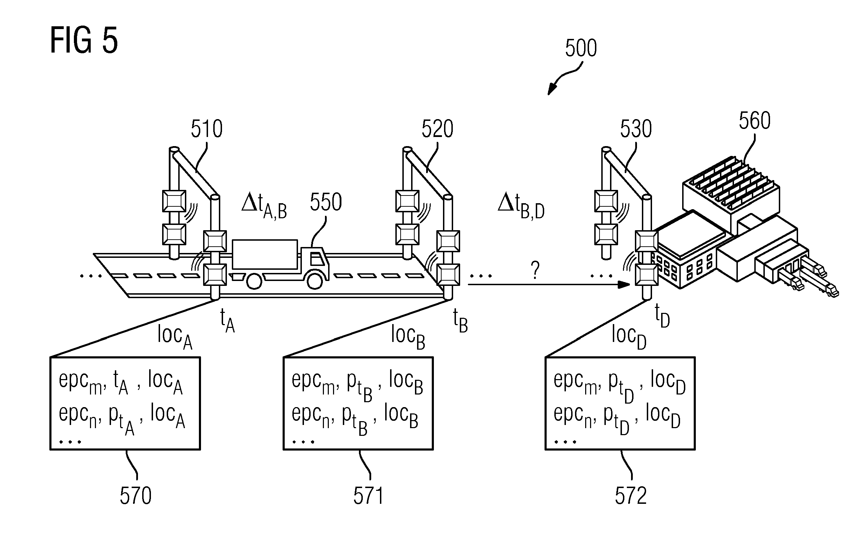

For estimating arrival and availability probabilities for objects, the proposed model uses the most recent tracing information (EPCIS-events) of all objects moving along the supply chain in combination with the historic information derived during the data mining process. **FIG.5** shows an exemplary scenario for arrival time prediction in a supply chain 500 which is based on the scenario already shown in Fig.3.

A gate 510 is located at a location $loc_A$ and a gate 520 is located at a location $loc_B$ of a supply chain 500. A further gate 530 is located at a location $loc_D$, representing a material receipt of a factory of an OEM 560. An object, marked with an individual electronic object code $epc_m$ representing e.g. a container loaded on a truck 550 is identified by an EPCIS-event at the location $loc_A$ at a time $t_A$.

By identifying the object $epc_m$ at the location $loc_A$, the resulting object event immediately triggers an Update_model rule at a prosecution time to (with $t_A$ = to, representing the time of the last recorded EPCIS-event):

$$\texttt{Update\_model}(t_A, epc_m loc_A) \longleftarrow$$

$$\texttt{ObjectEvent}(e_1, t_A, OBSERVE, epc_m, loc_A)$$

The updated information, representing the arrival time $t_A$ of object $epc_m$ at location $loc_A$ is stored (registered) in form of a list in a register 570 which is assigned to the gate 510. Accordingly, a register 571 is assigned to the gate 520 and a register 572 is assigned to the gate 530.

Triggering the Update_model rule at the time to = $t_A$ initiates routines in the production control system 110 controlling the update of arrival and availability probabilities for all objects moving along the supply chain 500 at the same moment, because a certain time has passed since registration of a preceding object event and the current object event, triggered by object $epc_m$, without detection/registration of any other object events.

Hence, besides registering the information concerning the arrival of the object $epc_m$ at the location $loc_A$ at the time $t_A$, arrival and availability probabilities have to be updated precisely concerning all the other objects having not arrived yet at their subsequent destination (location) since registration of the last object event.

Fig. 5 is illustrating an example for such kind of situation. According to the stored information in register 570, the object $epc_m$ has arrived at the time $t_A$ at the location $loc_A$ triggering the Update_model rule at the time to. A further object $epc_n$ has still not arrived at the location $loc_A$ at the time to. As the missing of the object $epc_n$ at the location $loc_A$ and the passing of the time $t_0$ is an important information, an arrival probability $p_{tA}$ (also referred to as "probability of the availability" or "arrival time probability") concerning the arrival of the object $epc_n$ at the location $loc_A$ at a time $t_A$ has to be estimated and stored in the register 570. In addition, an arrival probability $p_{tB}$ concerning the arrival of the object $epc_n$ at the location $loc_B$ at a time $t_B$ and an arrival probability $p_{tD}$ concerning the arrival of the object $epc_n$ at the location $loc_D$ at a time $t_B$ have to be estimated, the results are stored in the respective registers 571, 572.

Further, according to the proposed solution, an arrival probability $p_{tB}$ concerning the arrival of the object $epc_m$ at the location $loc_B$ at a time $t_B$, and an arrival probability $p_{tD}$ concerning the arrival of the object $epc_m$ at the location $loc_D$ at a time $t_D$, have to be estimated and stored in the respective registers 571, 572.

As shown in Fig.5, the proposed solution is based on information representing all objects (e.g. object $epc_m$) with their last confirmed identification (registration) at a specific location (e.g. at location $loc_A$) in the past (e.g. at the time $t_A$). Further, the proposed solution is based on information representing the arrival probabilities $p_{tA}$, $p_{tB}$, $p_{tD}$ for those objects $epc_m$, $epc_n$, that are scheduled to arrive at a certain location $loc_A$, $loc_B$, $loc_D$ of the supply chain 500 at a certain time in the future, i.e. at a time beyond to. As an example, the arrival probability of the object $epc_n$ at the location $loc_A$ at a time $t_A$ is also referred to as $p_{tA}(epc_n)$, consequently, the arrival probability of the object $epc_n$ at the subsequent location $loc_D$ at a time $t_D$ is also referred to as $p_{tD}(epc_n)$.

Further below, the procedure for estimating the arrival probabilities for an object epc is explained in more detail, controlling e.g. a Just-In-Sequence (JIS) delivery process based on a scenario as shown in Fig.5.

As already mentioned above, the estimation procedure is triggered by identification of an object, i.e. by an object-event (EPCIS-event) at a distinct time to. According to the proposed solution, a discrete event modeling approach in form of a Bayesian network is applied comprising three steps:

During a first step, an initial condition of a Bayesian network has to be estimated, defining an arrival probability density function for an object arriving at its subsequent location at a time beyond $t_0$. Bayesian networks are directed acyclic graphs whose nodes represent random variables in the Bayesian sense: they may be observable quantities, latent variables, unknown parameters or hypotheses. Edges represent conditional dependencies; nodes which are not connected represent variables which are conditionally independent of each other. Each node is associated with a probability function that takes as input a particular set of values for the node's parent variables and gives the probability of the variable represented by the node.

According to the example as shown in Fig.5, several arrival probabilities $p_{tB}$ representing the arrival of the truck 550, transporting the object $epc_m$, at the location $loc_B$ at different times $t_B$ in the future are estimated as the initial condition of the Bayesian network.

During a second step, a convoluted density function is estimated, representing several arrival probabilities of the object $epc_m$ at the next element of the supply chain, i.e. at the location $loc_D$ at different times $t_D$ in the future.

In a third step, based on the estimation of the arrival probability of the object $epc_m$, a calculation is possible estimating the probability that a transport or a production job, requiring the object $epc_m$, can be executed at the OEM 560 as planned.

The aforementioned three steps will be now explained in more detail.

Semi Markov initial condition

The initial condition is represented by a set of nodes in the Bayesian network, representing probabilities for different times at which an object is predicted to arrive at the respective next scheduled location. For the definition of the initial condition, the production control system 110 has to analyze the identified EPCIS-events representing the progress of an object during its way through the supply chain.

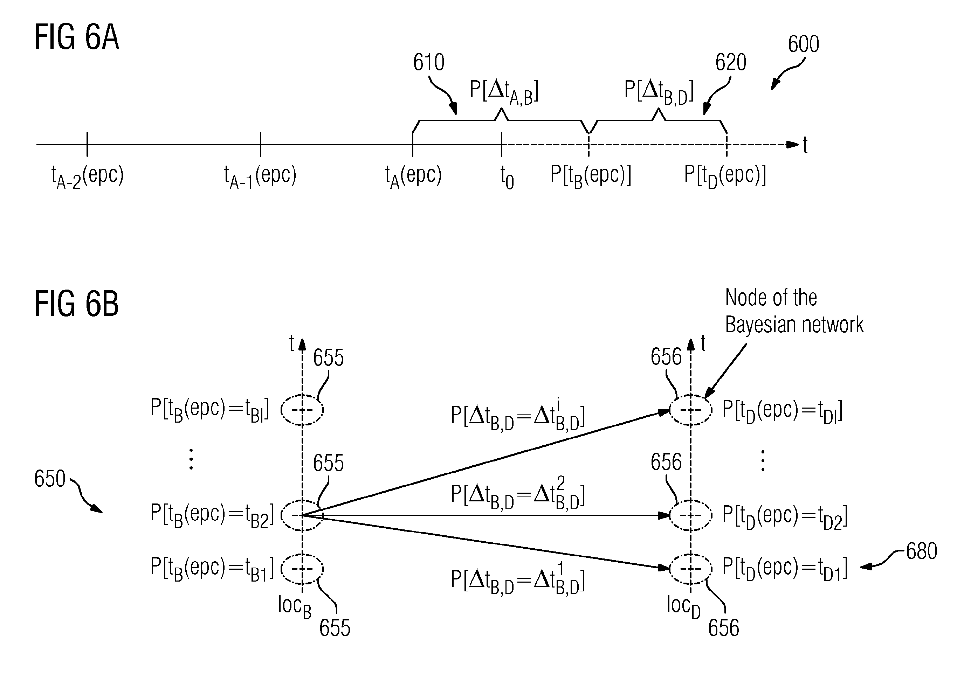

**FIG.6A** shows an example for the definition of an initial condition of a Bayesian network and **Fig.6B** shows the respective generation of a Bayesian network 650 based on the defined initial condition. The initial condition, as shown by Fig.6A and 6B is based on the exemplary scenario according to Fig.5.

Fig.6A visualizes an exemplary way of an object epc through a supply chain 600, which can be modeled as a chain of discrete steps of time t based on occurring EPCIS-events $t_{A-2}(epc)$, $t_{A1}(epc)$, $t_A(epc)$, triggered whenever the object epc is detected at a new location. A time $t_0$ is representing the actual prosecution time, e.g. a time an EPCIS-event is triggered by another object.

From all EPCIS-events $t_{A-2}(epc)$, $t_{A-1}(epc)$, $t_A(epc)$ triggered by the object epc, only the most recent one, i.e. $t_A(epc)$, triggered at the location $loc_A$, is important because the probability of a future EPCIS-event, i.e.

$P[t_B(epc)] = p_{tB}$     representing a predicted arrival time of the object epc at the location $loc_B$ (i.e. the probability of the availability of the object epc at the location $loc_B$ at the time $t_B$), and

$P[t_D(epc)] = p_{tD}$     representing a predicted arrival time of the object epc (i.e. the probability of the availability of the object epc at the location $loc_D$ at the time $t_D$) at a next supply chain entity (e.g. an OEM),

is independent from those EPCIS-events $t_{A-2}$, $t_{A-1}$ that occurred in the past.

Both arrival time predictions $P[t_B(epc)]$ and $P[t_D(epc)]$ can be derived based on the lead time density distribution $P[\Delta t_{A,B}]$ and $P[\Delta t_{B,D}]$ indicated by brackets 610, 620 in Fig. 6A.

A chain of EPCIS-events $t_{A-2}(epc)$, $t_{A-1}(epc)$, $t_A(epc)$, without considering their history, can be defined by a Markov process which is based on two assumptions:

    (i) a past state information is irrelevant because a future system state depends only on the present state, and

    (ii) a sojourn time within the current state is irrelevant (no state age memory).

Referring to the first assumption (i), applying a Markov process for data analysis based on a scenario as shown in Fig.6A and Fig.6B, the production control system 110 only has to consider the most recent EPCIS-event $t_A(epc)$, wherein older EPCIS-events (e.g. $t_{A-2}(epc)$, $t_{A-1}(epc)$), can be neglected during the prediction of arrival times at subsequent locations.

Assumption (ii) imposes a serious constraint for analyzing EPCIS-events. The time between two EPCIS-events (also referred to as inter-event time) is modeled by the Markov process as a geometric distribution for discrete time space or as an exponential distribution according to its continuous analogue. According to the results of the data mining, variations of the lead time density distribution (e.g. $P[\Delta t_{A,B}]$) between two successive EPCIS-events (e.g. identified at the location $loc_A$ and the location $loc_B$) can result in different forms of distributions. Consequently, a prediction based on assumption (ii) would be highly inaccurate. Assumption (ii) could be relaxed by applying a Semi-Markov process providing arbitrary probability distributions for inter-event times. Hence, analyzing EPCIS-events $t_A(epc)$, in particular with regard to the initial condition for the Bayesian network 650, by applying a Semi-Markov process allows an arrival time prediction, based on the consideration of the last detection of an EPCIS-event $t_A(epc)$ and the respective delay time since the detection of the EPCIS-event.

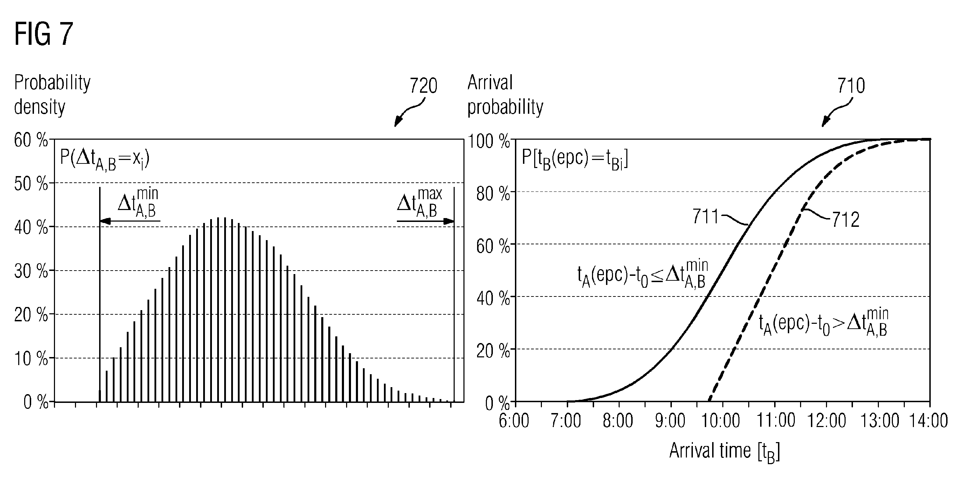

Fig.7 exemplarily shows in a graph 710 on the right side two distinct possibilities for calculating an arrival time probability $P[t_B(epc) = t_{Bi}]$, defining the initial condition of the Bayesian network. The abscissa of the graph 710 is representing an arrival time $t_B$ e.g. at location $loc_B$, wherein the ordinate is representing the respective arrival time probability P[t$_B$(epc) = t$_{Bi}$].

The respective calculation is based on a lead time density distribution which is shown in form of a probability density function P($\Delta$t$_{A,B}$ = x$_i$) in a graph 720 on the left side of Fig.7. The abscissa of the graph 720 is representing specific intervals x$_i$ of the lead time t$_{A,B}$, wherein the ordinate of the graph 720 is representing the respective probability of the lead time P($\Delta$t$_{A,B}$ = x$_i$).

The first case, represented by a form 711, is valid, if a minimum recorded lead time $\Delta$t$_{A,B}$$^{min}$ concerning the movement of the object epc from the location loc$_A$ to the successive location loc$_B$ has not yet passed. This is valid e.g. for an object epc triggering the Model_Update rule at the location loc$_A$ and for all further objects, for which the time span since their last detection or registration has not yet passed the minimum lead time, e.g. to - t$_A$(epc) $\leq \Delta$t$_{A,B}$$^{min}$ (with to representing the actual prosecution time, e.g. a further EPCIS-event triggering the update rule for all objects within the supply chain). In this case, the probability to arrive at the successive location loc$_B$ at a certain time t$_{Bi}$ in the future can be directly derived from the probability density function P($\Delta$T$_{A,B}$ = x$_i$). As an example (e.g. for the object epc = epc$_m$), form 711 is indicating an arrival time probability P[t$_B$(epc) = t$_{Bi}$] of 20% for the object epc$_m$ for arriving at location loc$_B$ at the time t$_{Bi}$= 09:00.

$$p_{t_{Bi}}(epc_m) = P[\Delta t_{A,B} = t_{Bi} - t_A(epc_m)] \text{ with } t_{Bi} \geq t_A(epc_m) + \Delta t_{A,B}^{min}$$

The second case, represented by form 712, is valid if the minimum recorded lead time $\Delta$t$_{A,B}$$^{min}$ concerning the movement of the object epc from the location loc$_A$ to the successive location loc$_B$ has already passed at the actual prosecution time to, i.e. to - t$_A$(epc) > $\Delta$t$_{A,B}$$^{min}$. Here, the additional information that the object epc has not yet arrived at the location loc$_B$ within the minimum lead time $\Delta$t$_{A,B}$$^{min}$, has to be incorporated with a correction factor into the calculation of the arrival time probability P[t$_B$(epc) = t$_{Bi}$]. The form 712 is exemplarily illustrating the adaption (also referred to as "Semi-Markov procedure") of the arrival time probability P[t$_B$(epc) = t$_{Bi}$] (e.g. for the object epc = epc$_m$ at the location loc$_B$) in case that the Model_Update rule has been triggered by an EPCIS-event after the minimum recorded lead time $\Delta$t$_{A,B}$$^{min}$ has passed:

$$p_{t_{Bi}}(epc_m) = \frac{P[\Delta t_{A,B} = t_{Bi} - t_A(epc_m)]}{1 - P[\Delta t_{A,B} < t_0 - t_A(epc_m)]} \text{ with } t_{Bi} \geq t_0$$

Convoluted arrival time density

As already mentioned above, FIG.6A exemplarily illustrates the basis for the derivation of the initial condition for the object epc arriving at the location loc$_B$ and Fig.6B illustrates the respective Bayesian network 650 generated based on the initial condition as shown in FIG.6A. Accordingly, during the execution of the procedure with an ongoing time to, further initial conditions can be derived, defining arrival probabilities at the respective next location for all objects in the supply chain.

In a next step, the individual arrival probabilities p$_{Bi}$(epc) for the object epc arriving at the location loc$_B$ are aggregated into a probability density function

$$\texttt{P}_{\texttt{tB}}(\texttt{epc}) = \texttt{p}_{\texttt{Bi}}(\texttt{epc}) = \texttt{P[t}_{\texttt{B}}(\texttt{epc}) = \texttt{t}_{\texttt{Bi}}]$$

The probability density function P$_{tB}$(epc) describes the arrival time probability (i.e. the probability of the availability) P[t$_B$(epc)] = p$_{tB}$ for the object epc at the location loc$_B$ respectively at discrete points in time t$_{Bi}$, wherein 1 $\leq$ i $\leq$ I. In the Bayesian network 650, each discrete point in time t$_{Bi}$ is represented by a node 655 based on a resolution r, wherein each probability of the availability P[t$_B$(epc)] = p$_{tB}$ for the object epc at the location loc$_B$ respectively at the discrete points in time t$_{Bi}$ is represented by the probability density function P$_{tB}$(epc).

Referring to the example as shown by the form 711 on the right side of Fig.7, each node 655 of the initial condition is representing a probability P[t$_B$(epc)] for a transport, i.e. for the object epc, to arrive, i.e. to be available, at the location loc$_B$ at a discrete point in time t$_{Bi}$, wherein 1 $\leq$ i $\leq$ I. According to form 711, the arrival probability P[t$_B$(epc)] for the object epc to arrive at the time t$_{Bi}$ = 9:00 at the location loc$_B$ is 20%.

The prediction of the arrival time P[t$_B$(epc) = t$_{Bi}$] for an object epc at the location loc$_B$ is irrelevant for a manufacturer, located at the location loc$_D$.

To estimate the arrival time probability for the object epc to arrive at the location $loc_D$, the probability density function $P[t_B(epc) = t_{Bi}] = P_{tB}(epc)$ is convoluted with the lead time density distribution $P[\Delta t_{B,D}]$ (referred by bracket 620 in Fig.6A) between the location $loc_B$ and the location $loc_D$ (representing the next entity of the supply chain 500 as shown in Fig.5) which was derived during the data mining procedure as shown in Fig.3A and Fig.3B. The resulting convolution is the outcome of the Bayesian network 650, resulting in a probability density function $P[t_D(epc) = t_{Di}] = P_{tD}(epc)$ representing the various arrival times $t_{Di}$ for an object epc at the location $loc_D$ with the corresponding arrival probability $P[t_B(epc)]$:

$$P[t_D(epc_m) = t_{Di}] = P[t_B(epc_m) = t_{Bi}] * P[\Delta t_{B,D} = t_{Di}]$$

wherein
epc = $epc_m$ and $(1 \leq i \leq I)$

Analogous to the initial condition (represented by the nodes 655) of the Bayesian Network 650, the discrete points in time $t_{Di}$ (wherein $1 \leq i \leq I$) are represented by nodes 656 which are defined based on the resolution r.

Each node 656 represents the basis for further steps of the proposed solution which will be explained hereinafter:

Node probability estimation:

The previous step has provided the probability density function $P_{tD}(epc) = P[t_D(epc) = t_{Di}]$ for the arrival of a certain object epc at a discrete point in time $t_{Di}$ at the location $loc_D$, i.e. the respective next supply chain entity that can be either a manufacturer or a logistics service provider. Besides the derivation of the arrival time probability $P[t_D(epc) = t_{Di}]$ for an object epc (also referred to as material availability), the calculation concerning the probability for a job execution or a transport departure requires the estimation of a plan adherence probability representing the probability that a specific job or transport is actually started as planned.

Beside the density function $P_r[\Delta t_{plan} = x_i]$ based on the production plan deviations and the density function $Pr[\Delta t_{plan}^j = x_{i,j}]$ based on deviations of the plan departures (as exemplarily illustrated in Fig.4), an attempt probability $p^{att}$ for a job epc = $epc_j$ is defined based on the distance between the time $t_{Di}$ represented by one of the nodes 656 and the time $t_{plan}$ of the planned production start for the job $epc_j$ that is associated with the respective object (e.g. representing a material) according to the following relation:

$$p_{t_{Di}}^{att}(epc_j) = P[\Delta t_{plan} = t_{plan}(epc_j) - t_{Di}]$$

The estimation of the attempt probability $p_{tDi}^{att}(epc_j)$ is analogous to the estimation of the deviations of the plan departures $P[\Delta t_{plan}^j]$. Hence, in case of

$$\mathtt{t_{plan}(epc_j) \; = \; t_{Di}}$$

the estimation of the attempt probability $p_{tDi}^{att}(epc_j)$ results in a probability for starting the production or the transport exactly on time.

However, it has to be noted, that the information concerning the time of the planned production start $t_{plan}(epc_j)$ represents sensible planning data suppliers usually are not willing to share for further analysis driven by the OEM and other downstream entities.

In that situation, the estimation of the attempt probability $p_{tDi}^{att}(epc)$ has to be derived based on the OTD (Order To Delivery) density function $P_r[odt = x_i]$. Hence, the attempt probability $p_{tDi}^{att}(epc)$ is estimated based on the respective time $t_{Di}$ of the node 656 and the order-specific delivery deadline of the production or transport.

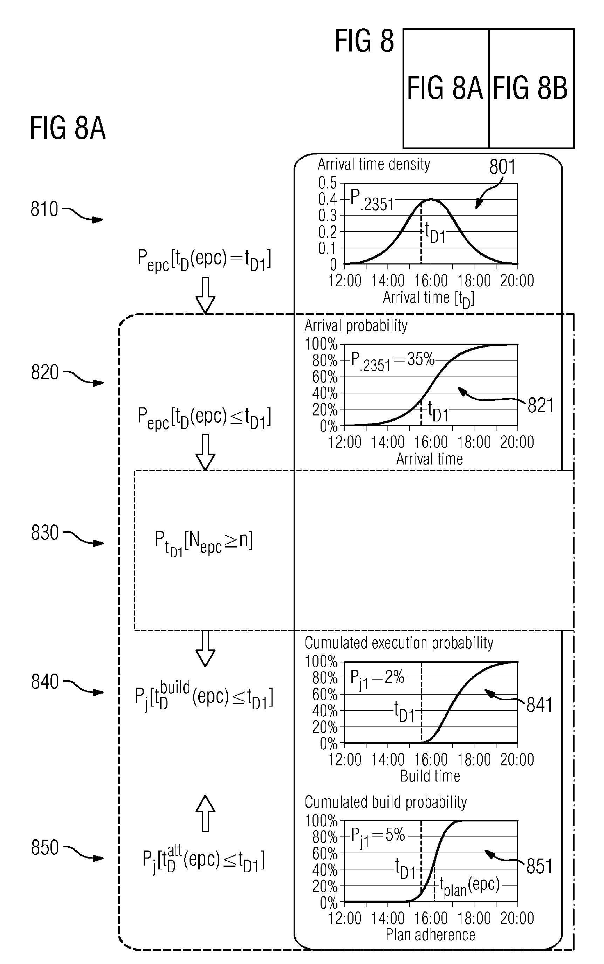

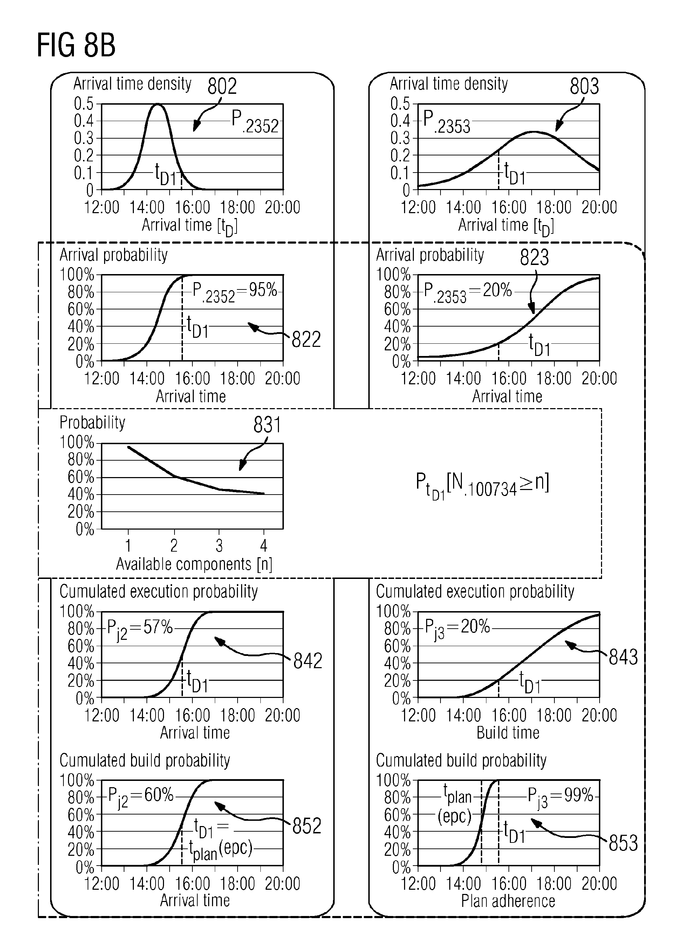

**Fig.8** illustrates in form of a schematic diagram the next steps of the proposed solution. Thereby the next steps are exemplarily explained in more detail based on that node 656 of the Bayesian network 650, representing the arrival time prediction $P[t_b(epc) = t_{D1}]$ at the discrete time $t = t_{D1}$ (highlighted with an arrow 680). The same procedure has to be applied accordingly based on all the other nodes 656, representing the discrete points in time $t_{D2}$ to $t_{DI}$.

A row 810 shows 3 examples for a probability density function $P_{tD}(epc)$ representing the arrival of a certain object epc at the time $t_{Di}$ at the location $loc_D$. A graph 801 represents the probability density function $P_{tD}(epc)$ for an object epc representing a component epc = 2351 (the number exemplarily represents a part of a unique component/product identifier). A graph 802 represents the probability density function $P_{tD}(epc)$ for an object epc, representing a component epc = 2352 and a graph 803 represents the probability density function $P_{tD}(epc)$ for an object epc, representing a component epc = 2353. In each graph 801, 802, 803 the arrival time probability for the arrival of the object epc at the discrete point in time $t_{D1}$ (= 15:30) at the location $loc_D$ is highlighted with a dotted line:

$$P_{epc}[t_D(epc) = t_{D1}]$$

A next step, represented by row 820, shows the transformation of the probability density functions 801, 802, 803 into their respective cumulative counterparts, i.e. into cumulative probability density functions represented by graphs 821, 822, 823. In contrast to the probability density functions 801, 802, 803 describing the probability of an event at a time $t_{Di}$, each cumulative probability density function 821, 822, 823 describe the probability of a specific event occurring up to a time $t_{Di}$, i.e. at the time $t_{Di}$ or earlier. The cumulative probability density functions 821, 822, 823 are also referred to as cumulated arrival time probabilities. Accordingly, the respective cumulated arrival time probabilities 821, 822, 823 are representing the probability of the availability of an object epc up to a discrete point in time $t_{Di}$. In each graph 821, 822, 823 the probability of the availability of the object epc up to the discrete point in time $t_{D1}$ (= 15:30) at the location $loc_D$ is highlighted with a dotted line:

$$P_{epc}[t_D(epc) \leq t_{D1}]$$

According to the graph 821, the probability of the availability of the object epc representing the component epc = 2351 up to the discrete point in time $t_{D1}$ (= 15:30) at the location $loc_D$ is P $_{.2351}$ = 35%. For that time $t_{D1}$, the respective probability of the object epc representing the component epc = 2352 is P $_{.2352}$ = 95% and the respective probability of the object epc representing the component epc = 2353 is P $_{.2353}$ = 20%.

A row 850 shows 3 examples for a probability density function representing an attempt probability P for a job j based on the distance between a time $t_{Di}$ and a time $t_{plan}$ of a planned production start for the job j that is associated with the respective object epc (e.g. a material or a component). Respective graphs 851, 852, 853 already show the cumulative counterparts, also referred to as cumulated plan adherence probability (up to the discrete point in time $t_{Di}$), wherein the discrete point in time $t_{D1}$ = 15:30 and the time $t_{plan}$ of a planned production start is highlighted with a dotted line:

$$P_j[t_D^{att}(epc) \leq t_{D1}]$$

The graph 851 represents the probability P of the plan adherence (e.g. the probability concerning the start of a production process) for a job j1 that is associated with the object epc representing the component epc = 2351. According to graph 851, the probability of production start for $t_{D1}$ = "15:30", or earlier, is $P_{j1}$ = 5%.

The graph 852 represents the probability P of the plan adherence for a job j2 that is associated with the object epc representing the component epc = 2352. According to graph 852, the probability of production start for $t_{D1}$ = "15:30", or earlier, is $P_{j1}$ = 60%.

The graph 853 represents the probability P of the plan adherence for a job j3 that is associated with the object epc representing the component epc = 2353. According to graph 853, the probability of production start for $t_{D1}$ = "15:30", or earlier, is $P_{j1}$ = 99%.

The respective functions in row 820 and 850 consequently show the cumulated arrival time probability of a object epc (represented by the graphs 821, 822, 823) and the cumulated plan adherence probability of the start of a transport or production job (represented by the graphs 851, 852, 853) up to the discrete point in time $t_{D1}$. To avoid skipping of any nodes 656 during the cumulation procedure, cumulation is started at the node 656 with the lowest time $t_{Di}$ and then continues for all successive nodes 656 of the Bayesian network 650, representing the probability density function P[$t_D$(epc)], in chronological order.

Applying this on the Bayesian network 650 as shown in Figure 6, which is based on the scenario as shown in Fig.5, the procedure starts with node 656 representing the discrete point in time $t_{D1}$ (highlighted by the arrow 680) and then continues in chronological order for the other discrete points in time $t_{Di}$ with ($2 \leq i \leq I$) :

$$P[t_D(epc_m) \leq t_{Di}] = P_{t_{Di}}(epc_m) = P_{t_{Di-1}}(epc_m) + p_{t_{Di}}(epc_m)$$

$$P[t_D^{att}(epc_j) \leq t_{Di}] = P_{t_{Di}}^{att}(epc_j) = P_{t_{Di-1}}^{att}(epc_j) + p_{t_{Di}}^{att}(epc_j)$$

wherein:

$$p_{tDi}(epc_m) = P[t_D(epc) = t_{Di}]$$

As a result, cumulation steps as represented in the row 850 and in the row 820 have provided

- the probability of the availability of each object $P_{epc}[t_D(epc) \leq t_{Di}]$ at the location $loc_D$ (cumulated arrival time probability), and
- the probability of the attempt to use these objects for a job, i.e. a production or transport process $P_j[t_D^{att}(epc) \leq t_{Di}]$ (cumulated plan adherence probability),

up to each discrete point in time $t_{Di}$ with $(1 \leq i \leq I)$, i.e. at the time $t_{Di}$ or earlier, represented by the nodes 656 of the Bayesian network 650.

In a next step, represented by a row 840, the aforementioned probabilities $P_{epc}[tD(epc) \leq t_{Di}]$ and $P_j[t_D^{att}(epc) \leq t_{Di}]$ are combined to derive an actual cumulated build probability $P_{tD}^{build}(epc_j) = P_j[t_D^{build}(epc) \leq t_{Di}]$ of a job j at a time $t_{Di}$ or earlier (which is also referred to as cumulated job execution probability), like a production job or of a transport departure. A production job can comprise several objects.

It has to be noted, that a production schedule comprises a number of production jobs being started successively and each requiring several different objects as input. Depending on whether there is dependence between objects (e.g. components) and production jobs, two cases can be distinguished.

First, the derivation of the build probability $P_{tD}^{build}(epc_j)$ of a production job is trivial if the product is assembled solely based on JIS components (just in sequence). JIS components are generally customer-specific and, even if not, already committed to a specific production job when the component is ordered.

Exemplarily, according to Fig.8, the graph 822 represents a probability of the availability of the object epc at the discrete point in time $t_{D1}$ of $P_{epc}[t_D(epc) \leq t_{D1}] = 95\%$ and the graph 852 represents a probability of the attempt to use the object epc for a production $P_j[t_D^{att}(epc)] \leq t_{D1} = 60\%$. Multiplying both probabilities results in a build probability of $P_{tD}^{build}(epc) = 57\%$.

Hence, in the case that a product is only composed of committed JIS objects, the probability for a successful production start $P[t_{Di}^{build}(epc_j) \leq t_{Di}]$ at a discrete point in time $t_{Di}$ is simply the product of the cumulated plan adherence probability $P_j[t_D^{att}(epc) \leq t_{Di}]$ and the various cumulated arrival time probabilities $P[t_D(epc) \leq t_{Di}]$ of those objects that are dedicated to the production job:

$$P[t_{Di}^{build}(epc_j) \leq t_{Di}] = P[t_D^{att}(epc_j) \leq t_{Di}] \cdot \prod P[t_D(epc_m) \leq t_{Di}]$$

However, most production processes at the OEM and suppliers also require JIC parts (just in case) that are neither customer specific nor committed to any job before production start. In this case, the availability of an object is dependent on the number of production starts at a discrete point in time $t_{Di}$. In other words, due to the first-come, first-serve principles, those production jobs that are started earlier get the required parts, limiting the availability of components for the remaining jobs. This can also be expressed more formally:

For n production jobs that can be attempted during a discrete point in time $t_{Di}$, the availability of at least one, at least two, ..., at least n parts has to be calculated by $\binom{N}{n}$.

Such kind of estimation of an overall availability $P_{tDi}[N_{epc} \geq n]$ of certain JIC objects $N_{epc}$ (e.g. product types or materials) requires an additional step based on each node 656 of the Bayesian network 650 which is represented by a row 830 in Fig.8. Assuming e.g. an object with a number ".100734", representing a certain material type, the estimation of the overall availability $P_{tDi}[N_{.100734} \geq n]$ would e.g. result as shown by a graph 831.

The combinatorial task of estimating probabilistic job attempts simultaneously influencing material availability (and vice versa), however, results in an huge number of possible combinations which is in contradiction to analytical solutions determining the exact individual build probabilities for the various jobs.

Monte-Carlo simulation

Thus, the calculation of the build probability $P_{tD}^{build}$ of a product that requires JIC parts is approximated by applying a Monte-Carlo simple sampling simulation which relies on repeated random sampling to obtain numerical results; i.e., by running simulations many times over in order to calculate those same probabilities heuristically. Through entering random variables for all uncertain parameters and repeating the simulation for a certain amount of times, most feasible outcomes are covered and weighted by the number of their occurrences.

The procedure first covers all scheduled jobs and objects arriving at the discrete point in time $t_{Di}$ (with $t_{Di} = t_{D1}$ according to the example as shown in Fig.8) that are completely certain by allocating objects to jobs, thereby reducing the number of available objects for the remaining jobs. The procedure then adds a counter $x(epc_j)$ for all remaining jobs which can be only realized with a certain probability, i.e. $P_{tDi}^{att}(epc_j) < 100\%$.

The following procedure is then repeated rep times:

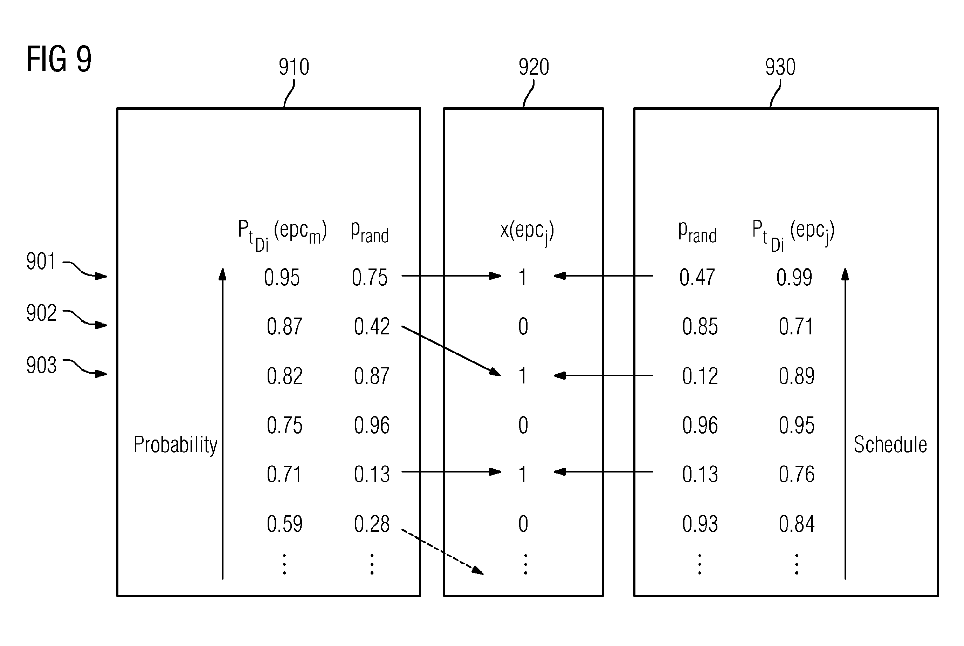

Fig. 9 is showing an example for the Monte-Carlo simulation procedure for the first repetition. In a box 910, those objects $epc_m$ are listed which are not available with complete certainty at the discrete point in time $t_{D1}$, i.e. $P_{tD1}(epc_m) < 100\%$. The objects are ordered according to their arrival probability at the discrete point in time $t_{D1}$. A random seed $p_{rand}$ is allocated to each object $epc_m$. In a box 930 the aforementioned remaining jobs $epc_j$ are listed which can be only realized with a certain probability at the discrete point in time $t_{D1}$, i.e. $P_{tD1}^{att}(epc_j) < 100\%$. The jobs are ordered according their schedule, i.e. plan adherence probability. A random seed $p_{rand}$ is allocated to each job $epc_j$. A counter $x(epc_j)$, allocated to each job $epc_j$ is located in a box 920.

During a first instance, the simulation is applied to each object $epc_m$ listed in the box 910. Thereby an inequality demands, that a random seed $p_{rand}$ is smaller than the probability of the object availability $P_{tD1}(epc_m)$:

$$P_{t_{Di}}(epc_m) > p_{rand} \longrightarrow \texttt{available with } 0 \leq p_{rand} < 1$$

with $t_{Di} = t_{D1}$

If the inequality is true, then the object $epc_m$ is assumed to be available for production or transport purposes at the discrete point in time $t_{D1}$.

Since deliveries from the supply chain to an OEM may contain a complete shipment of elements (e.g. a transport of objects in a container loaded on a truck), their individual arrival probability is clearly not independent from each other. Hence, assuming that the inequality is true for one object being part of a shipment, consequently all objects of the shipment have to be available as well.

Once the object availability was simulated (indicated by allocated random seeds $p_{rand}$ to the respective objects $epc_m$ in box 910), the procedure continues with the jobs $epc_j$ listed in box 930.

During a second instance, uncertain production jobs $epc_j$ are handled in chronological order on the time line. Hence, the simulation moves from one production job $epc_j$ to the next, starting with the job $epc_j$ representing the highest attempt probability $P_{tDi}^{att}(epc_j)$ at the discrete point in time $t_{D1}$. In other words, the Monte-Carlo method first simulates the execution of the first job $epc_j$ in the schedule and then moves successively to the subsequent jobs $epc_j$. Similar to the simulation concerning the object availability, the following inequality applies:

$$P_{t_{Di}}^{att}(epc_j) > p_{rand} \longrightarrow \texttt{attempt with } 0 \leq p_{rand} < 1$$

with $t_{Di} = t_{D1}$

The inequality indicates that if a random seed $p_{rand}$ is larger than the probability of the attempt of a production job $P_{tDi}^{att}(epc_j)$, then the job $epc_j$ is not attempted during the discrete point in time $t_{D1}$. As a consequence, the simulation skips the job $epc_j$ and moves to the next job $epc_j$ in the schedule. Contrary, if the job $epc_j$ is attempted, then the required object $epc_m$ is looked up in the bill of material. Assuming that all required objects $epc_m$ for the job $epc_j$ have been simulated as being available during the first instance, then these objects $epc_m$ are committed to the respective production job $epc_j$ fulfilling the aforementioned inequality. As this represents a successful attempt for the execution of a production job $epc_j$, the respective counter $X(epc_j)$ for the respective production job $epc_j$ is incremented, i.e. $x(epc_j) = x(epc_j) + 1$.

An insufficient availability of objects $epc_m$ for a production job $epc_j$ results in an abortion of the job attempt, even in case the attempt of a production job $P_{tD1}^{att}(epc_j)$ is intended to be realized. Consequently, no object $epc_m$ is committed and the respective counter $X(epc_j)$ for the respective production job $epc_j$ is not incremented. This procedure is done for all production jobs $epc_j$ that can be attempted during the discrete point in time $t_{D1}$.

As exemplarily shown in a row 901 of Fig.9, the value of the object availability $P_{tD1}(epc_m) = 0.95$ is bigger that the value of the random seed $p_{rand}$ = 0.75, allocated during the first instance of the Monte-Carlo simulation. This indicates the availability of the object $epc_m$ at the discrete point in time $t_{D1}$. Further, the probability of the attempt of a production job $P_{tD1}{}^{att}$ ($epc_j$) = 0.99 is bigger that the value of the random seed $p_{rand}$ = 0.47 allocated during the second instance of the Monte-Carlo simulation. This indicates, that the respective production job is attempted at the discrete point in time $t_{D1}$. Consequently, the available object $epc_m$ is committed to the respective production job $epc_j$. As this represents a successful attempt for the execution of a production job $epc_j$, the respective counter X($epc_j$) allocated to the respective production job $epc_j$ is incremented, i.e.

$$x(epc_j) = x(epc_j) + 1 = 0 + 1 = 1,$$

which is indicated by "1" in the row 901 in the box 920.

As shown by a row 902, the value of the object availability $P_{tD1}$($epc_m$) = 0.87 is bigger than the value of the random seed $p_{rand}$ = 0.42. This indicates the availability of the object $epc_m$ at the discrete point in time $t_{D1}$. However, the value of the probability of the attempt of a production job $P_{tD1}{}^{att}$ ($epc_j$) = 0.71 is smaller than the value of the random seed $p_{rand}$ = 0.85. This indicates, that the respective production job $epc_j$ is not attempted at the discrete point in time $t_{D1}$. Consequently, the available object $epc_m$ is not committed to the respective production job $epc_j$, hence the respective counter X($epc_j$) for the respective production job $epc_j$ is not incremented, i.e.

$$x(epc_j) = x(epc_j) + 0 = 0 + 0 = 0,$$

which is indicated by "0" in the row 902 in the box 920.

As shown in a row 903, the value of the probability of the attempt of a production job $P_{tD1}{}^{att}$ ($epc_j$) = 0.89 is bigger than the value of the random seed $p_{rand}$ = 0.12. This indicates, that the respective production job $epc_j$ is attempted at the discrete point in time $t_{D1}$. As a consequence, the aforementioned available object $epc_m$ located in the row 902 is committed to the respective production job $epc_j$ located the row 903 and the respective counter X($epc_j$) for the respective production job $epc_j$ is incremented, i.e.

$$x(epc_j) = x(epc_j) + 1 = 0 + 1 = 1,$$

which is indicated by "1" in the row 903 in the box 920.

This procedure applies in a self-explanatory way for the remaining production jobs $epc_j$ listed in the box 930.

After finalization of the simulation of all object availabilities $P_{tD1}$($epc_m$) and probabilities of the attempt of a production job $P_{tD1}{}^{att}$ ($epc_j$), the repetitive part of the Monte-Carlo simulation concludes with the next repetition, i.e. allocating new random seeds $p_{rand}$ to the objects $epc_m$ listed in the box 910 and allocating new random seeds $p_{rand}$ to the jobs $epc_j$ listed in the box 930.

After finalization of the last repetition of the Monte-Carlo simulation, the build probability $P_{tD1}{}^{build}$($epc_j$) of a job (which can be a transport or production process) to be carried out at the discrete point in time $t_{D1}$ is determined by diving the counter x($epc_j$) of each job $epc_j$ by the number rep of repetitions:

$$P_{t_{Di}}^{build}(epc_j) = \frac{x(epc_j)}{rep}$$

with $t_{Di} = t_{D1}$

After finalizing the estimation of the build probability $Pt_{D1}{}^{build}$($epc_j$), the calculation moves on to the next node 656 in the Bayesian network 650 representing the next discrete point in time $t_{D1+1}$ to estimate the respective build probability $P_{tD1+1}{}^{build}$($epc_j$).

In a next step, after finalization of the estimation of the build probabilities $P_{tDi}{}^{build}$($epc_j$) for all nodes 656 representing the discrete points in time $t_{Di}$ (with $1 \leq i \leq I$), the build probabilities $P_{tDi}{}^{build}$($epc_j$) will be transformed into a cumulative probability density function $P[_{tD}{}^{build}(epc_j) \leq t_{Di}]$ representing the build probability $P_{tDi}{}^{build}$($epc_j$) for starting a specific production or transport job $epc_j$ up to the discrete point in time $t_{Di}$ (with $1 \leq i \leq I$):

$$P[t_D^{build}(epc_j) \leq t_{Di}] = P_{t_{Di}}^{build}(epc_j)$$

The resulting cumulative build probabilities (also referred to as cumulated job execution probabilities) are illustrated by the graphs 841, 842, 843 in the row 840 of Fig.8.

The graph 841 represents a cumulated build probability $P_{j1}[t_D^{build}(epc) \leq t_{D1}]$ for the job j1 that is associated with the object epc, representing the component epc = 2351. As an example, the component epc = 2351 may be a car seat, manufactured by a tier-1 supplier and being part of a transport process to a factory of a car manufacturer. The graph 841, indicates a build probability $P_{j1}[t_D^{build}(epc) \leq t_{D1}]$ of 2% for execution of the job j1, i.e. integrating the car seat into the respective car up to the time $t_{D1}$.

Accordingly, the graph 842 represents a cumulated build probability $P_{j2}[t_D^{build}(epc) \leq t_{D1}]$ for the job j2 that is associated with the object epc, representing the component epc = 2352, which may be e.g. a bumper, manufactured by another tier-1 supplier. The graph 841, indicates a build probability $P_{j2}[t_D^{build}(epc) \leq t_{D1}]$ of 57% for execution of the job j2, i.e. integrating the bumper into the respective car up to the time $t_{D1}$.

As a further example, graph 843 represents a cumulated build probability $P_{j3}[t_D^{build}(epc) \leq t_{D1}]$ for the job j3 that is associated with the object epc, representing the component epc = 2353, which may be e.g. an engine. The graph 843, indicates a build probability $P_{j3}[t_D^{build}(epc) \leq t_{D1}]$ of 20% for execution of the job j3, i.e. integrating the engine into the respective car up to the time $t_{D1}$.

The proposed solution enables the probabilistic interpretation of EPCIS-events based on two major prosecution steps.

The first step comprises a data mining procedure during an engineering phase for estimating lead time density functions representing historic durations between two successive readings of EPCIS-events, triggered by objects during their movement through the supply chain. Besides estimating the lead time densities, further density functions have to be estimated, e.g. representing probabilities that supply chain entities do not adhere to their original schedules. For that, during data mining, it is also possible to derive density functions concerning plan deviations, i.e. the deviations of actual production or transport starts from the respective planned build times.

The second step is based on a model, triggered e.g. by a single EPCIS-event, to predict the probabilities of object availabilities at different discrete times in the future. As a final result, based on the predicted situation concerning the object availability and the internal plan adherence, the build probabilities of production jobs at suppliers and OEMs or departure probabilities for transport jobs of logistics service providers can be estimated.

The resulting build probabilities of production or transport jobs (job execution probabilities) may be used as basis for further analysis, like e.g.

(i) estimating business performance through the calculation of the expected KPI (Key Performance Indicator) development (based on the current supply chain situation), and
(ii) determining production jobs with a low execution probability (e.g., due to a supply chain event) and consequently triggering a rescheduling.

**Claims**

1. A method for processing events in a technical system, comprising the following steps,

   - triggering at least one event by at least one object (epc) at a first time ($t_A$) at a first location ($loc_A$) of the technical system (500),
   - deriving a probability of an availability ($p_{tD}$) of the at least one object (epc) at a second location ($loc_D$) of the technical system (500) at a later second time ($t_D$).

2. The method according to claim 1, wherein the probability of the availability ($p_{tD}$) of the at least one object (epc) at the second location ($loc_D$) is derived based on a probability of an availability ($p_{tB}$) of the at least one object (epc) at a third location ($loc_B$) of the technical system (500) at a third time ($t_B$), wherein the third location ($loc_B$) is located between the first location ($loc_A$) and the second location ($loc_D$).

3. A method according to claim 2, wherein the probability of the availability ($p_{tD}$) of the at least one object (epc) at the second location ($loc_D$) at the later second time ($t_D$) and the probability of the availability ($p_{tB}$) of the at least one object (epc) at the third location ($loc_B$) at the third time ($t_B$) is updated each time the at least one event is triggered.

4. The method according to claim 2 or 3, wherein the probability of the availability ($p_{tB}$) of the at least one object (epc) at the third location ($loc_B$) at the third time ($t_B$) is derived based on a lead time density distribution ($P[\Delta t_{A,B}]$) for the at least one object (epc) to be moved from the first location ($loc_A$) to the third location ($loc_B$) .

5. The method according to claim 4, wherein the lead time density distribution ($P[\Delta t_{A,B}]$) is derived based on previous events, in particular based on a data mining procedure.

6. The method according to claim 4 or 5, wherein the probability of the availability ($p_{tB}$) of the at least one object (epc) at the third location ($loc_B$) at the third time ($t_B$) depends on whether the object may be available at the third location ($loc_B$) within a lead time ($\Delta t_{A,B}^{min}$) .

7. The method according to claim 6, wherein the probability of the availability ($p_{tB}$) of the at least one object (epc) at the third location ($loc_B$) at the third time ($t_B$) is derived based on the lead time density distribution ($P[\Delta t_{A,B}]$) according to the following relation:

$$p_{tB} \; (epc) \; = \; P[\Delta t_{A,B} \; = \; t_B \; - \; t_A(epc)]$$

with $t_B \geq t_A \; (epc) + \Delta t_{A,B}^{min}$
wherein:

$\Delta t_{A,B}^{min}$ represents a minimum lead time.

8. The method according to claim 6, wherein the probability of the availability ($p_{tB}$) of the at least one object (epc) at the third location ($loc_B$) at the third time ($t_B$) is derived based on the lead time density distribution ($P[\Delta t_{A,B}]$) according to the following relation:

$$p_{tB}(epc) = \frac{P[\Delta t_{A,B} - t_B - t_A(epc)]}{1 - P[\Delta t_{A,B} < t_0 - t_A(epc)]}$$

with $t_B \geq t_0$
wherein:

- $\Delta t_{A,B}^{min}$ represents a minimum lead time,
- to represents an actual prosecution time.

9. The method according to any of the preceding claims 2 to 8, wherein the probability of the availability ($p_{tB}$) of the at least one object (epc) at the third location ($loc_B$) at the third time ($t_B$) is represented by a probability density function of the availability ($P_{tB}(epc)$) of the at least one object (epc) at the third location ($loc_B$), which is used as an initial condition of a Bayesian network (650) being used to derive the probability of the availability ($p_{tD}$) of the at least one object (epc) at the second location ($loc_D$) at the later second time ($t_D$).

10. The method according to claim 9, wherein the probability of the availability ($p_{tD}$) of the at least one object (epc) at the second location ($loc_D$) at the later second time ($t_D$) is derived from a probability density function of the availability ($P_{tD}(epc)$) of the at least one object (epc) at the second location ($loc_D$), which is provided by the Bayesian network according to the following mathematical convolution:

$$P_{tD}(epc) \; = \; P_{tB}(epc) \; * \; P[\Delta t_{B,D}]$$

wherein:

- $P_{tB}(epc)$ represents the probability density function of the availability, and
- $P[\Delta t_{B,D}]$ represents a lead time density distribution for the at least one object (epc) to be moved from the third location ($loc_B$) to the second location ($loc_D$) .

**11.** The method according to claim 10, wherein the lead time density distribution $P[\Delta t_{B,D}]$ is derived based on previous events, in particular based on a data mining procedure.

**12.** The method according to claim 10 or 11, wherein a cumulated probability density function of the availability, which is derived based on the probability density function of the availability ($P_{t_D}(epc)$), is used to derive a build probability ($Pj[t_D^{build}(epc) \leq t_D]$) for a job j associated with the at least one object (epc) at the later second time $t_D$ or earlier.

**13.** The method according to claim 12, wherein the build probability ($Pj\ [t_D^{build}\ (epc) \leq t_D]$) is derived dependent on a probability of an attempt ($P_j[t_D^{att} \leq t_D]$) to use the at least one object (epc) for the job j at the later second time $t_D$ or earlier.

**14.** The method according to any of the preceding claims 12 or 13, wherein the build probability ($P_j[t_D^{build}\ (epc) \leq t_D]$) is derived by using a Monte-Carlo simulation.

**15.** The method according to any of the preceding claims 2 to 14, wherein the at least one event is triggered each time the at least one object (epc) is passing a gate (510, 520, 530) located at the first or the second or the third location ($loc_A$, $loc_D$, $loc_B$) .

**16.** The method according to any of the preceding claims, wherein the at least one event is an EPCIS-event according to the EPCIS specification.

**17.** A device comprising and/or being associated with a processor unit and/or a hard-wired circuit and/or a logic device that is arranged such that the method according to any of the preceding claims is executable thereon.

**18.** A computer program product, directly loadable into a memory of a digital computer, comprising software code portions for performing the steps of the method according to any of the claims 1 to 16.

**19.** A computer readable medium, having computer-executable instructions adapted to cause a computer system to perform the steps of the method according to any of the claims 1 to 16.

FIG 1

EP 2 770 465 A1

FIG 2

# FIG 3A

300

310   320   350  351   360

$\Delta t_{A,B}$   $\Delta t_{B,D}$

$loc_A$   $loc_B$   $loc_D$

# FIG 3B

Probability
density

301

$P(\Delta t_{A,B} = x_i)$

60 %

50 %

$\Delta t_{A,B}^{min}$   $\Delta t_{A,B}^{max}$

40 %

30 %

20 %

10 %

0 %

FIG 4

Probability density

$P(\Delta t_{plan} = x_i)$

$t_{plan}$

$\Delta t_{plan}^{max}$

i=0

i=1

i=2

410

50 %
40 %
30 %
20 %
10 %
0 %

Probability density

$P(\Delta t_{plan}^{j} = x_{i,j})$

$t_{plan}^{j}$

$\Delta t_{plan}^{j}$

$t_{plan}^{j+1}$

420

50 %
40 %
30 %
20 %
10 %
0 %

FIG 5

FIG 6A

600

610 $P[\Delta t_{A,B}]$

620 $P[\Delta t_{B,D}]$

$t_{A-2}(epc)$ $\quad$ $t_{A-1}(epc)$ $\quad$ $t_A(epc)$ $\quad$ $t_0$ $\quad$ $t_B(epc)$ $\quad$ $t$

$P[t_B(epc)]$ $\quad$ $P[t_D(epc)]$

FIG 6B

650

Node of the Bayesian network

$P[t_B(epc)=t_{B1}]$ $\quad$ $P[t_B(epc)=t_{B2}]$ $\quad$ ... $\quad$ $P[t_B(epc)=t_{BI}]$

655 $\quad$ 655 $\quad$ 655

$loc_B$ $\quad$ t

$P[\Delta t_{B,D}=\Delta t^1_{B,D}]$ $\quad$ $P[\Delta t_{B,D}=\Delta t^2_{B,D}]$ $\quad$ $P[\Delta t_{B,D}=\Delta t^i_{B,D}]$

$P[t_D(epc)=t_{D1}]$ $\quad$ $P[t_D(epc)=t_{D2}]$ $\quad$ ... $\quad$ $P[t_D(epc)=t_{DJ}]$

656 $\quad$ 656 $\quad$ 656

$loc_D$ $\quad$ t

680

## FIG 7

EP 2 770 465 A1

Probability density

$P(\Delta t_{A,B} = x_i)$

$\Delta t_{A,B}^{min}$      $\Delta t_{A,B}^{max}$

720

Arrival probability

$P[t_B(epc) = t_{Bi}]$

710

711

712

$t_A(epc) - t_0 \leq \Delta t_{A,B}^{min}$

$t_A(epc) - t_0 > \Delta t_{A,B}^{min}$

Arrival time $[t_B]$

# FIG 8

| FIG 8A | FIG 8B |
|--------|--------|

## FIG 8A

810 →

$$P_{epc}[t_D(epc) = t_{D1}]$$

**Arrival time density** — 801

$P_{.2351}$

$t_{D1}$

Arrival time $[t_D]$

820 →

$$P_{epc}[t_D(epc) \leq t_{D1}]$$

**Arrival probability**

$P_{.2351} = 35\%$ — 821

$t_{D1}$

Arrival time

830 →

$$P_{t_{D1}}[N_{epc} \geq n]$$

840 →

$$P_j[t_D^{build}(epc) \leq t_{D1}]$$

**Cumulated execution probability**

$P_{j1} = 2\%$ — 841

$t_{D1}$

Build time

850 →

$$P_j[t_D^{att}(epc) \leq t_{D1}]$$

**Cumulated build probability**

$P_{j1} = 5\%$ — 851

$t_{D1}$

$t_{plan}(epc)$

Plan adherence

# FIG 8B

**Arrival time density** 802

P.2352

$t_{D1}$

Arrival time [$t_D$]

**Arrival time density** 803

P.2353

$t_{D1}$

Arrival time [$t_D$]

**Arrival probability**

P.2352=95%

$t_{D1}$

822

Arrival time

**Arrival probability** 823

P.2353=20%

$t_{D1}$

Arrival time

**Probability** 831

1  2  3  4
Available components [n]

$P_{t_{D1}}[N_{.100734} \geq n]$

**Cumulated execution probability**

$P_{j2}=57\%$

$t_{D1}$

842

Arrival time

**Cumulated execution probability**

$P_{j3}=20\%$

$t_{D1}$

843

Build time

**Cumulated build probability**

$P_{j2}=60\%$

$t_{D1}=$
$t_{plan}(epc)$

852

Arrival time

**Cumulated build probability**

$t_{plan}$
(epc)
$P_{j3}=99\%$

$t_{D1}$

853

Plan adherence

FIG 9

Europäisches
Patentamt

European
Patent Office

Office européen
des brevets

**EUROPEAN SEARCH REPORT**

Application Number

EP 13 17 3070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/219754 A1 (D AMBROSIO BRUCE [US]) 20 September 2007 (2007-09-20) * the whole document * ----- | 1-19 | INV. G06Q10/08 |
| X | EP 2 551 802 A1 (SIEMENS AG [DE]) 30 January 2013 (2013-01-30) * the whole document * ----- | 1-19 | |

TECHNICAL FIELDS
SEARCHED        (IPC)

G06Q

The present search report has been drawn up for all claims

| Place of search | Date of completion of the search | Examiner |
|---|---|---|
| Munich | 28 November 2013 | Gardiner, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 770 465 A1

## ANNEX TO THE EUROPEAN SEARCH REPORT
## ON EUROPEAN PATENT APPLICATION NO.

EP 13 17 3070

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2013

| Patent document cited in search report | Publication date | Patent family member(s) | Publication date |
|---|---|---|---|
| US 2007219754 A1 | 20-09-2007 | US 2007219754 A1<br>US 2011125699 A1<br>WO 2007149064 A1 | 20-09-2007<br>26-05-2011<br>27-12-2007 |
| EP 2551802 A1 | 30-01-2013 | NONE | |

For more details about this annex : see Official Journal of the European Patent Office, No. 12/82

**EP 2 770 465 A1**

**Non-patent literature cited in the description**

- **LAMPARTER, S. ; LEGAT, C. ; LEPRATTI, R. ; SCHARNAGL, J. ; JORDAN, L.** Event-Based Reactive Production Order Scheduling for Manufacturing Execution Systems. *Proceedings of the 18th IFAC World Congress,* 2011, 2722-2730